# FASCICULE DE BREVET EUROPEEN

(11) **EP 3 328 762 B1**
(45) Date de publication et mention de la délivrance du brevet: **15.11.2023**
(21) Numéro de dépôt: 15753625.1
(22) Date de dépôt: 31.07.2015
(51) Int. Cl.: B65G 47/14

(54) **ALIMENTATION REFERENCEE DE CAPSULES**
REFERENZIERTE ZUFÜHRUNG VON KAPSELN
REFERENCED FEEDING OF CAPSULES

(43) Date de publication de la demande: 06.06.2018
(73) Titulaire: Sidel Participations, 76930 Octeville-sur-Mer (FR)
(72) Inventeur: ROTH, Emmanuel, 67116 Reichstett (FR)
(74) Mandataire: Sidel Group
(86) Numéro de dépôt international: PCT/EP2015/067630
(87) Numéro de publication internationale: WO 2017/020923

(56) Documents cités:
- EP-A1- 2 588 394
- DE-A1-102008 057 902
- US-A- 3 292 249

## Description

La présente invention relève du domaine du conditionnement de contenant pour liquide, et a pour objet, d'une part, un dispositif d'alimentation en capsule de bouchage, et d'autre part, un procédé mettant en oeuvre ce dispositif.

Les lignes industrielles de conditionnement de liquide comprennent une étape de bouchage, au cours de laquelle une capsule, bouchon, ou autre élément de bouchage, est apposé sur le flacon rempli.

Comme le décrit par exemple US5394972, ces capsules sont généralement fournies par un dispositif d'alimentation qui comprend une trémie dans laquelle se trouve un stock de capsules en vrac. Un tapis circulant essentiellement verticalement vient alors prendre des capsules au fond de cette trémie et les amener en hauteur, où elles sont ensuite dégagées. Seules les capsules bien orientées, c'est-à-dire avec un fond contre le tapis, sont amenées jusqu'à la zone de sortie. Un tel dispositif est muni, en hauteur, d'une ouverture à travers laquelle les capsules sont ensuite envoyées dans une canalisation jusqu'à la boucheuse.

US4735343 divulgue un tel dispositif, muni d'une réglette oblique qui pousse sur le côté les capsules en fin de parcours pour qu'elles passent par la zone de sortie. Un des inconvénients est qu'à haute vitesse, des coincements peuvent se produire, ou alors que la réglette a un angle si faible que l'encombrement en hauteur est trop élevé.

WO2006045928 propose une configuration où les capsules sont éjectées du tapis par un flux d'air rasant, puis convoyées plus loin toujours avec un tel flux provoqué par un caisson formant alors un convoyeur à air. Les capsules reposent sur une courbure inférieure qui en assure le guidage. Un des inconvénients est la nécessité d'alimenter constamment ce dispositif en énergie. En outre, un flux d'air véhicule des poussières et peut donc ne pas respecter certaines exigences d'hygiène ou de bruit.

WO2006045927 propose quant à lui un principe où une restriction progressive, du type entonnoir, est aménagée au niveau de la goulotte en aval du tapis. Le mouvement des capsules reste provoqué par un flux d'air. Un des inconvénients d'un tel entonnoir est le grand risque de coincements dès lors que les cadences sont élevées.

DE 10 2008 057902 A1 divulgue par ailleurs un dispositif d'alimentation de capsules, comprenant un bac de réception pour des capsules en vrac, un tapis d'élévation muni de supports, pour une circulation des capsules vers le haut dans une direction essentiellement verticale au cours de laquelle les capsules mal orientées sont renvoyées vers le bac de réception, une goulotte de sortie pour amener les capsules au poste alimenté, ainsi qu'un moyen d'éjection pour amener dans ladite goulotte les capsules depuis un côté du tapis en hauteur, dispositif dans lequel la goulotte comprend, côté tapis, une partie d'extrémité où les capsules circulent sous l'effet de leur inertie et qui présente une courbure de guidage y délimitant leur trajectoire par le haut et dans lequel ladite goulotte présente, en aval de la partie d'extrémité, un canal de forme adaptée aux capsules pour en conserver l'orientation lors de leur circulation, la courbure s'étendant à partir dudit canal et dans lequel un bord dudit canal se prolongeant vers l'ouverture sous la forme de ladite courbure.

Il existe donc l'état de la technique un besoin d'améliorer ce genre de dispositif d'alimentation de capsules de bouchage, en particulier au niveau de la sortie du tapis, en proposant une solution fiable et économique pour alimenter à haute cadence des capsules correctement orientées.

Pour résoudre ce problème, l'invention propose d'assurer un référencement centrifuge des capsules éjectées hors du tapis, grâce à un profil de guidage courbe contre lequel elles peuvent se plaquer les unes derrière les autres.

L'invention a ainsi pour objet un dispositif selon le contenu de la revendication 1.

L'invention a aussi pour objet une méthode selon le contenu de la revendication 5.

L'invention sera mieux comprise grâce à la description ci-dessous, qui se base sur des modes de réalisations possibles, expliqués de façon illustrative et nullement limitative, en référence avec la figure annexée, qui schématise un dispositif conforme à l'invention.

L'invention a ainsi tout d'abord pour objet un dispositif d'alimentation 1 de capsules 2, comprenant un bac de réception 3 pour des capsules 2 en vrac, un tapis 4 d'élévation muni de supports 5, pour une circulation des capsules 2 vers le haut au cours de laquelle les capsules 2 mal orientées sont renvoyées vers le bac de réception 3, une goulotte 6 de sortie pour amener les capsules 2 au poste alimenté, ainsi qu'un moyen d'éjection 13 pour amener dans ladite goulotte 6 les capsules 2 depuis un côté du tapis 4 en hauteur.

Les supports 5 permettent au tapis 4 d'entraîner les capsules 2 vers le haut, les supports 5 formant pour elles une surface d'appui inférieure. Les capsules 2 peuvent bien sûr être de formes variées à chaque cycle de traitement. L'élévation par le tapis 4 permet aux capsules 2 mal orientées de retomber dans le bac de réception 3. Les capsules 2 bien orientées, avec leur fond fermé contre le tapis 4, sont ainsi entraînées par le tapis 4 jusqu'à une ouverture 12 de sortie. Cette ouverture 12 de sortie se trouve en partie haute du dispositif d'alimentation 1 et sur un côté. Les capsules 2 sont poussées jusqu'à ce qu'elles passent par cette ouverture 12 pour être dégagées du tapis 4. Le trajet de la capsule 2 dépend alors de sa position initiale sur le tapis 4, à savoir entre le bord où l'ouverture 12 est aménagée, ce qui correpsond au trajet le plus court, et le bord opposé, ce qui correspond au trajet le plus long.

Un moyen d'éjection 13 exerce alors la force requise sur les capsules 2 pour les entraîner jusqu'à la dite ouverture 12 de sortie. Il peut s'agir d'un moyen de poussée mécanique par contact avec un élément type poussoir, ou encore par flux d'air, etc.

Selon l'invention, la goulotte 6 comprend, côté tapis 4, une partie d'extrémité 7 où les capsules 2 circulent sous l'effet de leur inertie et qui présente une courbure 8 de guidage sans vis-à-vis, y délimitant leur trajectoire, notamment délimitant leur trajectoire par le haut, la courbure 8 formant alors guidage référencé jusqu'au canal 9. La partie d'extrémité 7 est montée au niveau de l'ouverture 12, et les capsules 2 y circulent donc directement après avoir été éjectées du tapis 4. La goulotte 6 s'étend préférablement vers le bas après la partie d'extrémité 7, depuis l'ouverture 12 située en hauteur, la partie d'extrémité 7 formant alors une partie supérieure 7. Dans d'autres applications, la goulotte 6 monte direrctement après la partie d'extrémité 7. Selon les configurations, l'entrée du canal 9, à partir de laquelle s'étend la courbure 8, est donc plus haute ou plus basse que l'ouverture 12 de sortie.

En aval de la circulation grâce au tapis 4, les capsules 2 circulent, après leur passage par l'ouverture 12, dans la goulotte 6, qui les amène préférablement plus bas, de sorte que la circulation des capsules 2, au moins au début de la goulotte 6, peut se faire sans moyen moteur artificiel. La seule pesanteur peut alors suffire à les déplacer au sein de la goulotte 6. Les capsules 2 sont ainsi préférablement lâchées après leur éjection forcée du tapis 4, et continuent librement leur trajet sous l'effet de leur inertie et de la pesanteur. Le dispositif d'alimentation 1 est préférablement dépourvu de moyen d'entraînement des capsules 2 directement en aval de l'ouverture 12, dans la partie supérieure 7 de la goulotte 6, en amont du canal 9.

La vitesse des capsules 2 en sortie de tapis 4, provoquée par le moyen d'éjection 13, les amène contre la courbure 8, qui va en assurer un guidage jusqu'au canal 9, ce dernier étant de dimensions correspondantes et complémentaires aux capsules 2, et en assure ainsi un bon guidage jusqu'au poste suivant. L'entrée du canal 9 est préférablement en contrebas par rapport à l'ouverture 12, la courbure 8 étant alors positionnée pour rabattre les capsules 2 vers ladite entrée, en particulier dans les cas où les capsules 2 ont une vitesse excessive et arriveraient trop loin par rapport à l'entrée du canal 9 en l'absence d'une telle courbure 8.

Dans ces réalisations, la courbure 8 se trouve donc au-dessus des capsules 2. Elle s'étend à peu près depuis le haut de l'ouverture 12. Les réalisations inverses bien que ne faisant pas partie de la présente invention, sont aussi possibles, avec une entrée de canal 9 située plus haut que l'ouverture 12 : dans ce cas, la courbure 8 se trouve sous le trajet des capsules 2, c'est-à-dire qu'elle s'étend à peu près depuis le bas de l'ouverture 12.

L'inertie des capsules 2 les amène contre la courbure 8, ce qui permet d'en obtenir le référencement en position nécessaire avant l'entrée du canal 9. Comme le dispositif d'alimentation 1 ne présente pas de guidage en vis-à-vis de la courbure 8, qui arrive à un bord du canal 9, les capsules 2 qui ne sont pas contre elle ne peuvent tout simplement pas entrer dans le canal 9. Cela garantit la création naturelle et fluide d'une colonne unifilaire de capsules 2 référencées, en évitant les blocages.

Ainsi, dans certains modes de réalisation, la courbure 8 prend la forme d'un arc, préférablement descendant depuis une ouverture 12 de sortie jusqu'à l'entrée du canal 9, en contrebas, de sorte à guider les capsules 2 contre elle jusqu'à l'entrée du canal 9. La courbure 8 est préférablement arquée pour éviter que les capsules 2 ne soient éjectées par rebond à l'occasion de la venue au contact contre la courbure 8. La courbure 8 peut par exemple suivre un arc dont la forme correspond au profil d'une chute libre, ce afin d'épouser au maximum une trajectoire naturelle de capsule 2 entre l'ouverture 12 et l'entrée du canal 9.

Dans certains modes de réalisation, le profil de la courbure 8 s'étend le long, voire au dessus, du trajet que suivrait un objet comme une capsule 2, sous le seul effet de la pesanteur, entre la sortie du tapis 4, où elle présente la vitesse horizontale nécessaire, et l'entrée du canal 9, en contrebas et éloigné horizontalement par rapport à ladite sortie, cette dernière étant formée par l'ouverture 12. Ainsi, si une capsule 2 a une vitesse horizontale supérieure à la vitesse minimale requise, elle est en théorie guidée par la courbure 8 dès le début. On comprendra que le trajet normal de chute sous l'effet de la gravité entre l'ouverture 12 et l'entrée du canal 9 ne dépend pas de façon essentielle de la capsule 2 elle-même, mais surtout de la position relative de ladite ouverture 12 et de ladite entrée du canal 9.

Comme il a déjà été évoqué, selon l'invention la goulotte 6 présente, en aval de la partie d'extrémité 7, un canal 9 de forme adaptée aux capsules 2 pour en conserver l'orientation lors de leur circulation, la courbure 8 s'étendant à partir dudit canal 9. Les capsules 2 référencées naturellement contre la courbure 8 sont alors amenées dans le canal 9, la courbure 8 s'étendant donc à partir d'un bord du canal 9. Autrement dit, un bord du canal 9 se prolonge vers l'ouverture sous la forme d'une courbure 8 de guidage, alors que le bord en vis-à-vis s'arrête. La circulation des capsules 2 dans le canal 9 peut être motorisée ou non.

Le canal 9 a une section de passage ajustée aux capsules 2, pour une circulation unifilaire, ce qui permet d'éviter que les capsules 2 ne changent d'orientation.

Selon l'invention le dispositif d'alimentation 1 présente une circulation de décharge 10, s'étendant depuis la partie d'extrémité 7 de la goulotte 6, pour recevoir et dégager de ladite partie d'extrémité 7 les capsules 2 non en vis-à-vis du canal 9, ce dernier présentant, à son extrémité au niveau de la partie d'extrémité 7 de la goulotte 6, un séparateur 11 apte à dévier les capsules 2 vers ladite circulation de décharge 10.

La circulation de décharge 10 amène les capsules 2 qui sont mal positionnées par rapport au canal 9, et donc non directement contre la courbure 8, à nouveau dans le bac de réception 3. L'entrée du canal 9 est donc pourvue d'une pointe, ou séparateur 11 qui présente un angle aiguë. Ce séparateur 11, du type pointe ou déviateur, se trouve donc à partir de la paroi du canal 9 qui est opposée à celle à partir de laquelle s'étend la courbure 8. Ce séparateur 11 dévie dans la circulation de décharge 10 les capsules 2 qui ne sont pas contre la courbure 8. L'angle aïgue contribue à éviter les coincements et favorise une circulation fluide.

Les capsules 2 sur lesquelles le séparateur 11 doit agir tel un déflecteur, peuvent se trouver décalées par rapport au canal 9 suite à une saturation du canal 9, par exemple. Une autre raison peut être un trop grand nombre de capsules 2 dans la partie d'extrémité 7, ce qui amène les capsules 2 dans cette partie à s'organiser en plus d'une colonne contre la courbure 8. Une vitesse trop faible de la capsule 2 peut aussi l'empêcher d'atteindre la courbure 8 avant l'entrée du canal 9.

Conformément à ce qui a déjà été décrit, selon une caractéristique additionnelle possible du dispositif d'alimentation 1, il présente une ouverture 12 de sortie, en hauteur, à travers laquelle passent les capsules 2 après leur entraînement sur le tapis 4 et à partir de laquelle s'étend la goulotte 6, le moyen d'éjection 13 agissant sur les capsules 2 au niveau du tapis 4 pour qu'elles traversent ladite ouverture 12 et circulent ensuite librement jusqu'à l'entrée du canal 9, guidées par la courbure 8, notamment tombent dans le canal 9, éventuellement grâce au guidage de la courbure 8. L'action du moyen d'éjection 13 peut être mécanique par poussée, ou éventuellemet par pression d'air. La circulation des capsules 2 dans la partie d'extrémité 7, ou partie supérieure 7, se fait donc sans l'action d'un moyen contrôlé de mise en mouvement. Seules la gravité, voire la courbure 8, ont un effet sur la trajectoire et la vitesse des capsules 2. Elles ne sont plus entraînées par le dispositif d'alimentation 1 entre l'ouverture 12 et au moins le canal 9, en aval de la partie d'extrémité 7.

L'invention a aussi pour objet une méthode mise en oeuvre par le dispositif décrit ci-dessus, à savoir un procédé d'alimentation de capsules 2 dans un poste de traitement, comprenant les étapes consistant essentiellement à
- élever les capsules 2 par une circulation à l'aide d'un tapis 4 muni de supports 5,
- au cours de l'élévation, éliminer les capsules 2 mal orientées,
- en fin d'élévation, dégager les capsules 2 du tapis 4 vers un canal 9 d'une goulotte 6,
- faire circuler les capsules 2 au sein du canal 9 jusqu'au poste de traitement.

Selon l'invention, dégager les capsules 2 vers le canal 9 consiste essentiellement à les laisser évoluer librement après le tapis 4 et jusqu'au canal 9, le long d'un trajet délimité au moins partiellement par une courbure 8 de guidage, notamment une courbure délimitant le trajet par le haut et/ou sans vis-à-vis. Il s'agit donc, lors de l'éjection des capsules 2 hors du tapis 4, de prévoir une vitesse suffisante pour que lesdites capsules 2 atteignent effectivement l'entrée du canal 9, en aval de partie d'extrémité 7. Si les capsules 2 ont une vitesse supérieure, elles viennent contre la courbure 8, qui les guide alors jusqu'à l'entrée du canal 9. Les capsules 2 n'ont donc pas besoin d'être forcées mécaniquement contre la surface de référence que forme la courbure 8, puisqu'elles y vont naturellement sous l'effet de leur inertie. L'inertie des capsules 2 représente une force suffisamment élevée pour obtenir ce référencement contre la courbure 8, mais suffisamment faible pour ne pas provoquer de coincements si les capsules 2 forment plus qu'une simple colonne unifilaire.

Ainsi, selon une caractéristique additionnelle possible, la vitesse des capsules 2, lors de leur dégagement vers la goulotte 6, est telle qu'elles viennent contre la courbure 8 au moins pour une partie de leur trajet, de sorte à en obtenir un référencement en position. Le moyen d'éjection 13 est donc piloté en conséquence.

Selon l'invention, les capsules 2 sont dégagées vers le canal 9 en exerçant sur elles une poussée essentiellement horizontale depuis la zone du tapis 4 jusqu'à une ouverture 12 de sortie en hauteur, les capsules 2 circulant ensuite librement sous l'effet de la pesanteur jusqu'au canal 9, préférablement en contrebas, éventuellement guidées par la courbure 8. Cette poussée est donc transversale à l'avance du tapis 4, et va d'un côté dudit tapis 4 à l'autre. Dans l'absolu, comme le tapis 4 est en mouvement constamment, les capsules 2 ont, par rapport au sol, une vitesse avec, outre une composante transversale à la direction du tapis 4, une composante parallèle à la direction du tapis 4, provenant de l'élévation du tapis 4 elle-même.

Cette composante de vitesse est essentiellement verticale et est significativement plus faible que la composante horizontale de la vitesse.

Selon une autre caractéristique additionnelle possible, la poussée horizontale des capsules 2 et la montée verticale du tapis 4 sont proportionnelles, et, en fonctionnement, supérieures à un seuil inférieur respectif au dessus duquel les capsules 2 circulent contre au moins une partie de la courbure 8. En effet, dans certains modes de réalisation, le moyen d'éjection 13 comprend une solution du type poussoir, devant circuler entre les supports 5, et devant donc présenter un mouvement qui est aussi partiellement vertical, le long de l'élévation du tapis 4. L'éloignement horizontal entre, d'une part, l'ouverture 12 et, d'autre part, l'embouchure du canal 9, contribue à définir une vitesse horizontale minimale pour les capsules 2 après l'ouverture 12, en dessous de laquelle les capsules 2 n'atteignent pas ledit canal 9. Dans les cas où la vitesse des capsules 2 en sortie de tapis 4 est celle du moyen d'éjection 13 qui les pousse, ledit moyen d'éjection 13 doit se déplacer avec une vitesse horizontale minimale. Comme le mouvement de ce moyen d'éjection 13 est coordonné au mouvement d'avance du tapis 4, compte tenu des supports 5 entre lesquels il doit circuler, il existe donc aussi une vitesse d'avance minimale du tapis 4, en dessous de laquelle, au final, les capsules 2 n'atteindront vraisemblablement pas le canal 9.

Enfin, selon une autre caractéristique additionnelle possible, le procédé comprend, en outre, une étape consistant, en aval du tapis 4, à renvoyer vers une circulation de décharge 10 les capsules 2 détectées comme étant non conformes à un critère prédéfini intrinsèque, de vitesse, et/ou d'orientation, de sorte à ne pas les amener au poste normalement alimenté. Il se peut en effet que des capsules 2 mal orientées passent par l'ouverture 12 de sortie, en particulier pour les configurations où le tapis 4 est court pour des questions d'encombrement en hauteur. En outre, des tests de conformité peuvent être mis en place pour détecter une capsule 2 qui ne serait intrinsèquement pas conforme lorsqu'elle vient être libérée par le tapis 4, par exemple une capsule sans bague ou incomplète.

Le procédé présente pour ces cas une étape où le flux de capsules 2 peut être dirigé vers une circulation de décharge 10 plutôt que vers le canal 9 relié au poste alimenté. Il est ainsi possible d'éviter d'envoyer des capsules 2 défectueuses au poste alimenté. La circulation de décharge 10 peut simplement être reliée à la trémie 3. La circulation de décharge 10 et le canal 9 s'étendent tous les deux en parallèle depuis la partie d'extrémité 7, depuis le séparateur 11.

L'invention va maintenant être expliquée en référence avec la figure annexée.

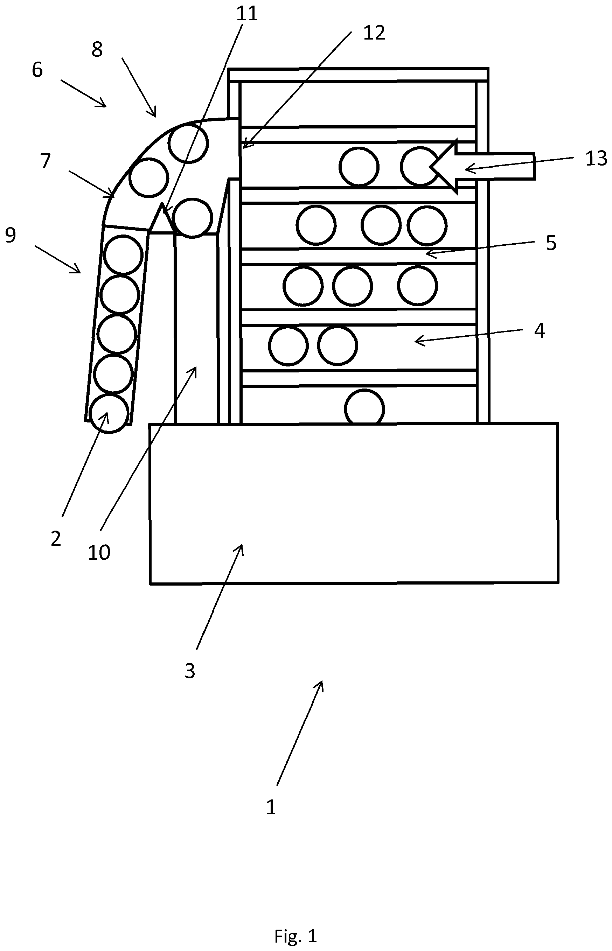

A la figure 1, le dispositif d'alimentation 1 traite des capsules 2 ou bouchons qui seront posés sur un contenant du type bouteille, brique ou autre. Ce genre de capsule 2, généralement ouvrable par dévissage, a donc souvent un fond en forme de disque à partir duquel s'étend une paroi circonférentielle à l'intérieur de laquelle se trouve un filetage. Cette capsule 2 peut ensuite venir être vissée directement sur l'extrémité ouverte d'une bouteille. L'embase complémentaire à ce filetage peut aussi être prévue directement sur la capsule 2, comme pour des applications où la capsule 2 est ensuite collée sur une brique.

Ces capsules 2 sont donc envoyées par le dispositif d'alimentation 1 à un poste du type boucheuse, qui peut aussi assurer des fonctions d'étiquetage, ou encore de remplissage de bouteille. Il importe que les capsules 2 soient correctement orientées, conformément à la configuration du poste alimenté par le dispositif d'alimentation 1. Un des rôles du dispositif d'alimentation 1 est de garantir que les capsules 2 qu'il fournit ont toujours l'orientation prédéfinie pour le poste qui les utilise.

Pour ce faire, le dispositif d'alimentation 1 est muni d'un tapis 4 sans fin, circulant dans une direction essentiellement verticale. Ce tapis 4 est muni de supports 5 successifs qui prennent préférablement la forme de taquets qui s'étendent transversalement à la direction d'avance du tapis 4. Ces taquets ou supports 5 entraînent mécaniquement un ensemble de capsules 2 lorsqu'ils circulent dans le bac de réception 3 où se trouve un ensemble de capsules 2, en vrac.

Le tapis 4 est orienté de sorte que les capsules 2 dont le fond ne se trouve pas contre le tapis 4 retombent dans le bac de réception 3 sous l'effet de la pesanteur. C'est donc en faisant retomber dans le bac de réception 3 les capsules 2 mal orientées que le dispositif d'alimentation 1 assure une fonction de sélection qui lui permet de n'envoyer que des capsules 2 correctement orientées. Cette sélection se fait donc lors de l'élévation des capsules 2 par le tapis 4. Le dispositif d'alimentation 1 est ainsi muni, en hauteur après une circulation du tapis 4 depuis la trémie 3, d'une ouverture 12, aménagée sur le côté du tapis 4, et à travers laquelle les capsules 2 passent, après avoir été élevées par le tapis 4 jusqu'à cette hauteur. Normalement, à la hauteur de l'ouverture 12, le tapis 4 ne transporte que des capsules 2 correctement orientées, c'est à dire avec leur fond fermé contre le tapis 4. Comme le tapis 4 avance en continu même lorsque les capsules 2 en sont dégagées, cette ouverture 12 latérale présente, dans la direction d'avance du tapis 4, une dimension plus grande que celle des capsules 2. Les capsules 2 arrivent donc dans la goulotte 6 depuis différentes hauteurs le long du trajet du tapis 4. Une des raisons de cette répartition dans cette direction est aussi que les capsules 2 se trouvent à différents endroits entre les deux bords longitudinaux du tapis 4 et que la distance qu'elles doivent parcourir pour atteindre l'ouverture 12 de sortie est différente pour chacune d'elle.

Le dispositif d'alimentation 1 est muni d'un moyen d'éjection 13 qui pousse les capsules 2 à travers l'ouverture 12 de sortie. Ce moyen d'éjection 13 peut être un flux d'air transversal à l'avance du tapis, un poussoir, ou autres moyen d'action.

Une goulotte 6 est montée sur l'ouverture 12 aménagée en hauteur dans le dispositif d'alimentation 1, de sorte que les capsules 2, poussées transversalement par le moyen d'éjection 13 en direction de et à travers l'ouverture 12 latérale, continuent leur parcours dans ladite goulotte 6. Cette goulotte 6 est préférablement connectée, directement ou non, à l'entrée du poste à alimenter. Les capsules 2 y circulent sous l'effet de la pesanteur ou sous l'effet d'un moyen d'entraînement qui peut être une courroie, par exemple.

La goulotte 6 présente un canal 9 de circulation dont la section de passage correspond à la forme des capsules 2 traitées, ce qui permet d'éviter notamment que les capsules 2 pivotent autour de l'axe le long duquel s'étend le canal 9. L'ajustement entre, d'une part, la section du canal 9, et, d'autre part, la forme des capsules 2, garantit donc que les capsules 2 qui sont correctement orientées en haut du tapis 4, au niveau de l'ouverture 12 de sortie, conservent leur orientation jusqu'au poste alimenté.

Ce canal 9 peut prendre diverses formes, comme, par exemple, un canal 9 de guidage creusé dans la masse, un canal définit par des parois fermées, ou encore un canal 9 délimité par des joncs positionnés sur des platines successives le long du canal 9, etc.

Les capsules 2 circulent donc dans le canal 9 les unes derrière les autres, en ligne unifilaire. Les capsules 2 passent donc d'une position qui n'est pas complètement maîtrisée à la sortie du tapis 4 à une position qui est maîtrisée au niveau du canal 9. Pour éviter les coincements inhérents à un positionnement progressif à l'aide d'un resserrement en forme de coin ou d'entonnoir, il est proposé ici d'éjecter les capsules 2 hors du tapis 4 à une vitesse suffisamment élevée pour qu'elles viennent se plaquer contre une courbure 8 qui les guidera ensuite jusqu'à l'entrée du canal 9, leur vitesse leur permettant de conserver leur référencement contre la courbure 8.

Ainsi, la goulotte 6 est pourvue d'une partie d'extrémité 7, qui vient entre le canal 9 de convoyage guidé et l'ouverture 12 latérale à travers laquelle circulent les capsules 2 lorsqu'elles sont dégagées du tapis 4. De façon préférée, la goulotte 6 amène les capsules 2 vers un niveau plus bas que l'ouverture 12, la partie d'extrémité 7 est donc la portion la plus haute de la goulotte 6, le canal 9 se trouvant en contre bas. Cette partie d'extrémité 7 sert d'adaptation entre l'ouverture 12 latérale et le canal 9. Le dispositif d'alimentation 1 présente alors un guidage courbe, ou courbure 8, aménagé dans la partie d'extrémité 7, supérieure, de la goulotte 7, qui, sans vis-à-vis pour éviter les coincements, délimite le trajet des capsules 2 entre la sortie du tapis 4, en hauteur, et l'embouchure d'entrée du canal 9, située plus bas.

Au niveau de cette partie d'extrémité 7, les capsules 2 circulent avec leur axe de symétrie sensiblement horizontal, avec leur fond, en forme de disque plein, contre une surface de glissement, sensiblement verticale. Les capsules 2 sont donc amenées à circuler dans un logement défini par deux faces en vis-à-vis, perpendiculaires à l'axe de symétrie de la capsule 2 et donc sensiblement verticales, ainsi que la courbure 8, cette dernière étant sans vis-à-vis jusqu'au canal 9, et plus particulièrement jusqu'à son entrée, où se trouve un séparateur 11.

Dans les cas privilégiés, car consommant peu d'énergie, où c'est la pesanteur qui fait circuler les capsules en aval de l'ouverture 12 et dans la goulotte 6, cette dernière débouche sur un moyen de reprise des capsules 2 que comporte le dispositif d'alimentation 1. Il peut par exemple s'agir d'une roue motrice de sélection, de transfert et/ou d'orientation complémentaire des capsules 2, qui reçoit les capsules 2 à l'unité et les entraîne plus loin, par exemple sur une courroie crantée motorisée.

Les capsules 2 sont dégagées du tapis 4 transversalement, à l'aide du moyen d'éjection 13 et présentent donc, lors de leur passage par l'ouverture 12 en hauteur pour aboutir dans la partie d'extrémité 7 de la goulotte 6, une vitesse horizontale non nulle, étant entendu que le moyen d'éjection 13 exerce sur les capsules une vitesse qui est transversale à l'avance du tapis 4, et donc essentiellement horizontale. On notera que dans les cas où le moyen d'éjection 13 est du type à poussoir, une synchronisation entre le mouvement longitudinal du tapis 4 et le mouvement correspondant du tapis 4 est possible. Ainsi, de façon générale, sous l'effet du moyen d'éjection 13, les capsules 4 sont animées, par rapport au tapis 4, d'un mouvement transversal à son avance, ce qui signifie que les capsules 4 sont animées d'une vitesse, par rapport au sol, non seulement horizontale mais avec aussi une composante dans la direction d'avance du tapis 4. Cela explique par ailleurs aussi la nécessité d'une ouverture 12 de sortie en hauteur qui s'étend dans la direction d'avance du tapis 4, alors que le canal 9, en aval, présente une section de passage ajustée à la capsule 2.

La partie d'extrémité 7 de la goulotte 6, montée contre l'ouverture 12 de sortie, présente une courbure 8 de guidage orientée vers le bas, s'étendant préférablement depuis l'ouverture 12 jusqu'à l'embouchure du canal 9. Cette courbure 8 s'oppose au mouvement des capsules 2 dans la partie d'extrémité 7 et les amène jusqu'au canal 9.

Une fois dégagées du tapis 4, les capsules 2 sont libres et continuent leur mouvement sous l'effet de leur inertie. Le dispositif d'alimentation 1 est en effet dépourvu de moyen d'action entraînant les capsules 2 entre l'ouverture 12 de sortie tapis 4 et au moins l'embouchure du canal 9. La courbure 2 est telle que les capsules 2 viennent à son contact alors qu'elles poursuivent librement leur mouvement, compte tenu de leur inertie et sous l'effet de la pesanteur, suite au mouvement provoqué par le dispositif d'alimentation 1 pour les dégager du tapis 4.

La courbure 2 est aussi préférablement telle qu'elle évite un rebond des capsules 2 à l'occasion du contact. Préférablement, le profil de la courbure 2 suit donc approximativement la forme d'une courbe de chute libre avec une vitesse horizontale initiale. Les capsules 2 trop rapides sont donc rabattues par la courbure 8, vers le bas, en direction de l'entrée du canal 9, en contrebas par rapport à l'ouverture 12 en hauteur aménagée sur le côté du tapis 4.

La courbure 8 assure donc un référencement des capsules 2, puisque celles-ci viennent à son contact et qu'elle sert alors de guide, sans vis-à-vis. La coubure 8 s'étend à partir d'un bord du canal 9, de sorte que les capsules 2, une fois en contact contre la courbure 8, sont correctement référencées pour une entrée dans le canal 9 de forme ajustée. On obtient ainsi un référencement centrifuge des capsules 2 contre la coubure 8.

L'absence de contre guide en vis-à-vis de la courbure 8 évite les coincements, et l'inertie des capsules 2 assure toutefois qu'elles soient plaquées contre la courbure 8 et donc au moins guidées par elle. Les capsules 2 qui ne sont pas au contact de la courbure 8 au niveau de l'embouchure du canal 9 ne peuvent donc tout simplement pas entrer dans ledit canal 9, et peuvent s'écarter de lui librement et sans coincement, puisque la courbure 8 est un guide sans vis-à-vis.

On comprendra que la distance horizontale entre, d'une part, l'ouverture 12 latérale du tapis 4, et, d'autre part, l'embouchure du canal 9, influence la vitesse horizontale minimale que doit avoir une capsule 2 lors du passage par ladite ouverture 12 pour effectivement atteindre le canal 9. En dessous de cette vitesse, les capsules ne pourront pas atteindre le canal 9. A partir de cette vitesse et au-dessus, les capsules 2 viennent au contact de la courbure 8 délimitant par le haut leur trajet et la longent en circulant contre elle jusqu'à l'embouchure du canal 9. Plus la vitesse horizontale initiale de la capsule 2 est élevée, plus son parcours contre la courbure 8 avant l'entrée du canal 9 sera long.

La courbure 8 peut donc suivre la forme de la chute libre entre l'ouverture 12 de sortie et l'entrée du canal 9, avec la vitesse horizontale correspondante. Si la vitesse horizontale est plus élevée, la capsule 2 arrive alors doucement et tôt au contact de la courbure 8, qui la guide jusqu'à l'entrée du canal 9.

De façon générale, l'inertie de la capsule 2 l'amène contre la courbure 8, cette dernière agissant comme surface de guidage sans vis-à-vis et limitant alors les coincements, et ce jusqu'à l'entrée du canal 9, la capsule 2 se déplaçant librement sous l'effet de son inertie entre, d'une part, le tapis 4, d'où elle est éjectée par le moyen d'éjection 13, et, d'autre part, l'entrée du canal 9, où elle continue ensuite son mouvement, sous l'effet de la pesanteur voire d'un moyen actif de déplacement. Ce principe général est donc compatible avec des configurations où l'entrée du canal 9 se trouve à une hauteur plus élevée que la sortie latérale du tapis 4, ainsi qu'avec des configurations où l'entrée du canal 9 est située en dessous.

Le dispositif d'alimentation 1 est aussi pouvu d'une circulation de décharge 10 qui assure le retour dans le bac de réception 3 des capsules 2 qui ne peuvent pas entrer dans le canal 9. Le canal 9 ne présente en effet préférablement pas une entrée dont la section diminue jusqu'à celle correspondant à la capsule 2 à traiter, ce qui contribue à éviter les coincements à haute cadences. Ainsi, seules les capsules 2 correctement alignées contre la courbure 8 qui s'étend à partir du canal 9 peuvent circuler dans ledit canal 9. Les capsules 2 décalées par rapport à la courbure 8 et qui ne sont donc pas correctement en vis-à-vis de l'embouchure du canal 9 ne peuvent pas y entrer, et doivent alors être renvoyées vers le bac de réception 3, ou trémie.

Dans la partie d'extrémité 7, la goulotte 6 présente alors un séparateur 11, en vis-à-vis de la courbure 8 à l'entrée du canal 9. Ce séparateur 11 favorise l'éloignement par rapport au canal 9 des capsules 2 qui ne sont pas correctement en face de lui. Ce séparateur 11 assure un guidage qui tend à repousser les capsules 2 qui ne sont pas contre la courbure 8. Le séparateur 11 forme l'extrémité de séparation entre, d'une part, le canal 9, et, d'autre part, la circulation de décharge 10. L'un de ses bords s'étend en vis-à-vis de l'extrémité de fin de la courbure 8, du côté du canal 9, alors que l'autre de ses bords s'étend dans le prolongement de la circulation de décharge 10. Le séparateur 11 assure donc que les capsules 2 envoyées dans la goulotte 6 par le moyen d'éjection 13 sont envoyées soit dans le canal 9 soit dans la circulation de décharge 10.

Conformément à ce qui a été décrit ci-dessus, le moyen d'éjection 13 crée pour les capsules 2 une vitesse transversale à l'avance du tapis 4 qui est suffisamment élevée pour qu'une fois libérées dans la partie d'extrémité 7 de la goulotte 6, elles puissent atteindre l'entrée du canal 9, notamment grâce au guidage de la courbure 8 contre laquelle elles viennent circuler au moins partiellement, le cas échéant.

Dans certains modes de réalisation, le moyen d'éjection 13 prend la forme d'un poussoir qui vient circuler transversalement entre les supports 5, d'un côté à l'autre du tapis 4, pour déplacer les capsules 2 vers l'ouverture 12. La vitesse des capsules 2 lors de leur passage par l'ouverture 12 correspond donc à la vitesse de déplacement du moyen d'éjection 13. La vitesse horizontale des capsules 2 devant être supérieure à un seuil, en dessous duquel elles n'atteignent pas l'entrée du canal 9, il en va de même pour la vitesse transversale du moyen d'éjection 13, qui doit aussi être supérieure à un seuil.

En outre, comme le poussoir formant moyen d'éjection 13 circule entre deux supports 5 successifs sur le tapis 4, la vitesse de son mouvement transversal est proportionnel à la vitesse d'avance sur le tapis 4. Par conséquent, la vitesse d'avance du tapis 4 est pilotée par une unité de contrôle qui en assure une vitesse minimale pour que le moyen d'éjection 13 du type poussoir puisse imprimer aux capsules 2 une vitesse suffisamment élevée pour que leur inertie les amène contre la courbure 8, qui les dirige alors jusqu'à l'entrée du canal 9.

Pour les situations où un faible débit de capsules 2 est requis en sortie du dispositif d'alimentation 1, il est donc envisageable de faire fonctionner le dispositif d'alimentation 1, en alternance, à un régime auquel les capsules 2 ont une vitesse suffisante pour atteindre le canal 9, éventuellement avec un débit plus élevé, et un régime où les capsules 2 ne vont pas suffisamment vite pour l'atteindre.

Grâce à l'invention, il est ainsi possible de réduire l'énergie nécessaire au convoyage des capsules, et d'éviter, grâce au référencement par inertie contre la courbure, des éventuels coincements de capsules.

## Revendications

1. Dispositif d'alimentation (1) de capsules (2), comprenant un bac de réception (3) pour des capsules (2) en vrac, un tapis (4) d'élévation muni de supports (5), pour une circulation des capsules (2) vers le haut au cours de laquelle les capsules (2) mal orientées sont renvoyées vers le bac de réception (3), une goulotte (6) de sortie pour amener les capsules (2) au poste alimenté, ainsi qu'un moyen d'éjection (13) pour amener dans ladite goulotte (6) les capsules (2) depuis un côté du tapis (4) en hauteur,
dispositif dans lequel la goulotte (6) comprend, côté tapis (4), une partie d'extrémité (7) où les capsules (2) circulent sous l'effet de leur inertie et qui présente une courbure (8) de guidage sans vis-à-vis, y délimitant leur trajectoire par le haut, et dans lequel
ladite goulotte (6) présente, en aval de ladite partie d'extrémité (7), un canal (9) de forme adaptée aux capsules (2) pour en conserver l'orientation lors de leur circulation, la courbure (8) s'étendant à partir dudit canal (9), un bord dudit canal (9) se prolongeant vers l'ouverture sous la forme de ladite courbure (8), alors que le bord en vis-à-vis s'arrête,
ledit dispositif (1) présentant une circulation de décharge (10), s'étendant depuis ladite partie d'extrémité (7) de ladite goulotte (6), pour recevoir et dégager de ladite partie d'extrémité (7) les capsules (2) non en vis-à-vis dudit canal (9), ce dernier présentant, à son extrémité au niveau de la partie d'extrémité (7) de la goulotte (6), un séparateur (11) apte à dévier les capsules (2) vers ladite circulation de décharge (10).

2. Dispositif selon la revendication 1, où
la courbure (8) prend la forme d'un arc.

3. Dispositif selon la revendication 2, où
le profil de la courbure (8) s'étend le long, voire au dessus, du trajet que suivrait un objet comme une capsule (2), sous le seul effet de la pesanteur, entre la sortie du tapis (4), où elle présente la vitesse horizontale nécessaire, et l'entrée du canal (9), en contrebas et éloigné horizontalement par rapport à ladite sortie.

4. Dispositif selon l'une quelconque des revendications 1 à 3, **caractérisé en ce que**
il présente une ouverture (12) de sortie, en hauteur, à travers laquelle passent les capsules (2) après leur entraînement sur le tapis (4) et à partir de laquelle s'étend la goulotte (6), le moyen d'éjection (13) agissant sur les capsules (2) au niveau du tapis (4) pour qu'elles traversent ladite ouverture (12) et circulent ensuite librement jusqu'à l'entrée du canal (9), guidées par la courbure (8).

5. Procédé d'alimentation de capsules (2) dans un poste de traitement, comprenant les étapes consistant essentiellement à
- élever les capsules (2) par une circulation à l'aide d'un tapis (4) muni de supports (5),
- au cours de l'élévation, éliminer les capsules (2) mal orientées,
- en fin d'élévation, dégager les capsules (2) du tapis (4) vers un canal (9) d'une goulotte (6),
- faire circuler les capsules (2) au sein du canal (9) jusqu' au poste de traitement,
procédé dans lequel
dégager les capsules (2) vers le canal (9) consiste essentiellement à les laisser évoluer librement après le tapis (4) et jusqu'au canal (9), le long d'un trajet délimité au moins partiellement par le haut une courbure (8) de guidage sans vis-à-vis, un bord du canal (9) se prolongeant vers l'ouverture sous la forme de ladite courbure (8) alors que le bord en vis-à-vis s'arrête,
et dans lequel les capsules (2) sont dégagées vers le canal (9) en exerçant sur elles une poussée essentiellement horizontale depuis la zone du tapis (4) jusqu'à une ouverture (12) de sortie en hauteur, les capsules circulant ensuite librement sous l'effet de la pesanteur jusqu'au canal (9), préférablement en contrebas.

6. Procédé selon la revendication 5, où
la vitesse des capsules (2), lors de leur dégagement vers la goulotte (6), est telle qu'elles viennent contre la courbure (8) au moins pour une partie de leur trajet, de sorte à en obtenir un référencement en position.

7. Procédé selon la revendication 5, où
la poussée horizontale des capsules (2) et la montée verticale du tapis (4) sont proportionnelles, et, en fonctionnement, supérieures à un seuil inférieur respectif au dessus duquel les capsules (2) circulent contre au moins une partie de la courbure (8).

8. Procédé selon l'une quelconque des revendications 5 à 7, **caractérisé en ce que**
il comprend, en outre, une étape consistant, en aval du tapis (4), à renvoyer vers une circulation de décharge (10) les capsules (2) détectées comme étant non conformes à un critère prédéfini intrinsèque, de vitesse, et/ou d'orientation.

## Patentansprüche

1. Vorrichtung (1) zum Zuführen von Kapseln (2), umfassend einen Aufnahmebehälter (3) für lose Kapseln (2), ein mit Stützen (5) versehenes Hebeband (4) für einen Kreislauf der Kapseln (2) nach oben, in dessen Verlauf falsch ausgerichtete Kapseln (2) zum Aufnahmebehälter (3) zurückgeführt werden, eine Auslassrinne (6), um die Kapseln (2) zur Zufuhrstation zu bringen, sowie ein Auswurfmittel (13), um die Kapseln (2) von einer in der Höhe liegenden Seite des Bands (4) in die Rinne (6) zu bringen,
wobei bei der Vorrichtung die Rinne (6) auf der Seite des Bandes (4) einen Endabschnitt (7) umfasst, wo die Kapseln (2) unter der Wirkung ihrer Trägheit zirkulieren und der eine Führungskrümmung (8) ohne Gegenüber aufweist, die dort ihren Weg von oben begrenzt, und
wobei die Rinne (6) stromabwärts des Endabschnitts (7) einen Kanal (9) aufweist, dessen Form an die Kapseln (2) angepasst ist, um deren Ausrichtung während ihres Kreislaufs beizubehalten, wobei sich die Krümmung (8) vom Kanal (9) aus erstreckt, wobei sich ein Rand des Kanals (9) in Form der Krümmung (8) zur Öffnung hin verlängert, während der gegenüberliegende Rand endet,
wobei die Vorrichtung (1) einen Entladekreislauf (10) aufweist, der sich vom Endabschnitt (7) der Rinne (6) aus erstreckt, um die Kapseln (2), die dem Kanal (9) nicht gegenüberliegen, aufzunehmen und aus dem Endabschnitt (7) freizugeben, wobei der Kanal (9) an seinem Ende auf Höhe des Endabschnitts (7) der Rinne (6) einen Separator (11) aufweist, der dazu geeignet ist, die Kapseln (2) in Richtung des Entladekreislaufs (10) umzulenken.

2. Vorrichtung nach Anspruch 1, wobei die Krümmung (8) die Form eines Bogens annimmt.

3. Vorrichtung nach Anspruch 2, wobei sich das Profil der Krümmung (8) entlang oder sogar über der Bahn erstreckt, der ein Objekt wie eine Kapsel (2) allein unter dem Einfluss der Schwerkraft zwischen dem Auslass des Bands (4), wo es die erforderliche horizontale Geschwindigkeit aufweist, und dem Einlass des Kanals (9), der tiefer liegt und horizontal von diesem Auslass entfernt ist, folgen würde.

4. Vorrichtung nach einem der Ansprüche 1 bis 3, **dadurch gekennzeichnet, dass** sie eine Auslassöffnung (12) in der Höhe aufweist, die die Kapseln (2) nach ihrer Bewegung auf dem Band (4) passieren und von der aus sich die Rinne (6) erstreckt, wobei das Auswurfmittel (13) auf Höhe des Bandes (4) auf die Kapseln (2) einwirkt, damit diese die Öffnung (12) passieren und dann frei bis zum Einlass des Kanals (9) zirkulieren, wobei sie durch die Krümmung (8) geführt werden.

5. Verfahren zum Zuführen von Kapseln (2) in eine Verarbeitungsstation, umfassend die im Wesentlichen in Folgendem bestehenden Schritte:
- Anheben der Kapseln (2) durch einen Kreislauf mit Hilfe eines mit Stützen (5) ausgestatteten Bands (4),
- während des Anhebens Entfernen der falsch ausgerichteten Kapseln (2),
- am Ende des Anhebens Freigeben der Kapseln (2) vom Band (4) in Richtung eines Kanals (9) einer Rinne (6),
- Zirkulierenlassen der Kapseln (2) innerhalb des Kanals (9) bis zur Verarbeitungsstation,
wobei bei dem Verfahren das Freigeben der Kapseln (2) in Richtung des Kanals (9) im Wesentlichen darin besteht, sie nach dem Band (4) und bis zum Kanal (9) entlang einer Bahn, die zumindest teilweise von oben durch eine Führungskrümmung (8) ohne Gegenüber begrenzt wird, frei laufen zu lassen, wobei sich ein Rand des Kanals (9) zur Öffnung hin in Form der Krümmung (8) verlängert, während der gegenüberliegende Rand endet, und wobei die Kapseln (2) in Richtung des Kanals (9) freigegeben werden, indem auf sie ein im Wesentlichen horizontaler Schub vom Bereich des Bands (4) bis zu einer in der Höhe liegenden Auslassöffnung (12) ausgeübt wird, wobei die Kapseln anschließend unter der Wirkung der Schwerkraft frei bis zum vorzugsweise tiefer liegenden Kanal (9) zirkulieren.

6. Verfahren nach Anspruch 5, wobei die Geschwindigkeit der Kapseln (2) bei ihrer Freigabe in Richtung der Rinne (6) so ist, dass sie zumindest für einen Teil ihrer Bahn gegen die Krümmung (8) kommen, sodass sie eine Positionsreferenzierung erhalten.

7. Verfahren nach Anspruch 5, wobei der horizontale Schub der Kapseln (2) und der vertikale Anstieg des Bands (4) proportional zueinander und im Betrieb größer als ein jeweiliger unterer Schwellenwert sind, oberhalb dessen die Kapseln (2) gegen zumindest einen Teil der Krümmung (8) zirkulieren.

8. Verfahren nach einem der Ansprüche 5 bis 7 **dadurch gekennzeichnet, dass** es ferner einen Schritt umfasst, der darin besteht, die Kapseln (2), die als nicht konform mit einem vordefinierten intrinsischen, geschwindigkeits- und/oder ausrichtungsbezogenen Kriterium erfasst wurden, stromabwärts des Bands (4) zu einem Entladekreislauf (10) zurückzuführen.

## Claims

1. Device (1) for feeding capsules (2), comprising a receiving container (3) for loose capsules (2), a lifting belt (4) provided with supports (5), for circulation of the capsules (2) upwards during which the incorrectly oriented capsules (2) are returned to the receiving container (3), an outlet channel (6) for bringing the capsules (2) to the fed station, and an ejection means (13) for bringing the capsules (2) into said channel (6) from a side of the belt (4) at height,
in which device
the channel (6) comprises, on the belt side (4), an end part (7) in which the capsules (2) circulate under the effect of their inertia and which has a guide curve (8), not facing anything, that delimits the trajectory of said capsules at the top, and in which device
said channel (6) has, downstream of said end part (7), a duct (9) of a shape adapted to the capsules (2) for maintaining the orientation thereof during their circulation, the curve (8) extending from said duct (9), one edge of said duct (9) being extended in the form of said curve (8) towards the opening, while the facing edge terminates,
said device (1) having a discharge circulation means (10), extending from said end part (7) of said channel (6), for receiving and releasing from said end part (7) the capsules (2) that are not facing said duct (9), the latter having, at its end in the region of the end part (7) of the channel (6), a separator (11) able to divert the capsules (2) towards said discharge circulation means (10) .

2. Device according to Claim 1, wherein the curve (8) is in the form of an arc.

3. Device according to Claim 2, wherein the profile of the curve (8) extends along, or even above, the path that an object such as a capsule (2) would follow, merely under the effect of gravity, between the outlet of the belt (4), at which said capsule has the necessary horizontal speed, and the inlet of the duct (9), at a lower level and spaced apart horizontally from said outlet.

4. Device according to any one of Claims 1 to 3, **characterized in that**
it has an outlet opening (12), at height, through which the capsules (2) pass after their driving on the belt (4) and from which the channel (6) extends, the ejection means (13) acting on the capsules (2) on the belt (4) such that they pass through said opening (12) and then circulate freely to the inlet of the duct (9), guided by the curve (8).

5. Method for feeding capsules (2) to a treatment station, comprising the steps consisting essentially in
- lifting the capsules (2) by circulation with the aid of a belt (4) provided with supports (5),
- during the lifting, removing the incorrectly oriented capsules (2),
- at the end of lifting, releasing the capsules (2) from the belt (4) towards a duct (9) of a channel (6),
- circulating the capsules (2) within the duct (9) to the treatment station,
in which method
releasing the capsules (2) towards the duct (9) consists essentially in allowing them to progress freely after the belt (4) and up to the duct (9) along a path at least partially delimited at the top by a guide curve (8) that does not face anything, one edge of the duct (9) being extended in the form of said curve (8) towards the opening while the facing edge terminates,
and in which method the capsules (2) are released towards the duct (9) by having exerted on them an essentially horizontal push from the area of the belt (4) to an outlet opening (12) at height, the capsules then circulating freely under the effect of gravity to the duct (9), preferably at a lower level.

6. Method according to Claim 5, wherein
the speed of the capsules (2), during their release towards the channel (6), is such that they come into abutment against the curve (8) at least along part of their path, so as to obtain a position referencing.

7. Method according to Claim 5, wherein
the horizontal push of the capsules (2) and the vertical ascending movement of the belt (4) are proportional, and, during operation, greater than a respective lower threshold above which the capsules (2) circulate against at least a part of the curve (8).

8. Method according to any one of Claims 5 to 7, **characterized in that**
it further comprises a step consisting, downstream of the belt (4), in returning the capsules (2) detected as being not in accordance with an intrinsic predefined criterion, of speed and/or of orientation, to a discharge circulation means (10).
